# FASCICULE DE BREVET EUROPEEN

(11) **EP 3 418 205 B1**
(45) Date de publication et mention de la délivrance du brevet: **04.11.2020**
(21) Numéro de dépôt: 17177457.3
(22) Date de dépôt: 22.06.2017
(51) Int. Cl.: B65B 5/10, G05B 19/418, B65B 59/00, B65B 59/04, B65B 35/14, B65B 35/08, B65B 9/04, B25J 9/16

(54) **DISPOSITIF MODULABLE DE DISTRIBUTION/REPARTITION DE COMPRIMES DANS DES ALVEOLES D'UNE BANDE DE CONDITIONNEMENT D'UNE MACHINE DE TYPE BLISTEREUSE**
MODULIERBARE VORRICHTUNG ZUR AUSGABE/VERTEILUNG VON TABLETTEN IN DIE HOHLRÄUME EINES VERPACKUNGSSTREIFENS EINER MASCHINE VOM TYP BLISTERMASCHINE
MODULAR DEVICE FOR DISPENSING/DISTRIBUTING TABLETS INTO CELLS OF A PACKAGING BELT OF A BLISTER-PACKING MACHINE

(43) Date de publication de la demande: 26.12.2018
(73) Titulaire: Elizabeth Europe, 41260 La Chaussée-Saint-Victor (FR)
(72) Inventeur: COLOMBAT, Philippe, 41190 Valencisse (FR)
(74) Mandataire: Ipside

(56) Documents cités:
- FR-A1- 2 759 346
- FR-A1- 2 882 987
- US-A1- 2009 260 321

## Description

La présente invention se rapporte à l'outillage de conditionnement de médicaments, et plus particulièrement les systèmes de distribution/répartition de comprimés.

Il existe dans l'art antérieur de nombreuses installations de conditionnement permettant de distribuer/répartir des comprimés ou gélules dans des bandes alvéolées en déplacement longitudinal. Par exemple, comme indiqué dans US2009260321 les comprimés sont répartis dans les alvéoles de plaquettes thermoformées dans une nappe en matière synthétique, par exemple une matière plastique transparente, les feuilles alvéolées recevant ensuite à un autre poste une pellicule de fermeture telle qu'un film protecteur d'aluminium.

La bande est transformée par une machine spécifique de mise sous blister en une bande pourvue d'alvéoles. Les alvéoles de la bande sont remplies automatiquement par un système d'alimentation en comprimés, puis les alvéoles remplies sont recouvertes dudit film protecteur. II est connu d'une part des machines de mise sous blister dans lesquelles l'avance de la bande est continue et, d'autre part, des machines dans lesquelles l'avance de la bande au niveau de la dépose des comprimés est discontinue.

Les installations existantes assurent la répartition des comprimés sur la largeur de la bande défilante longitudinalement. La partie distribution est disposée en aval d'un réservoir de stockage temporaire des comprimés à distribuer et comporte de manière usuelle une trémie de distribution ainsi que des moyens délivrant les comprimés par vagues de sorte que ceux-ci forment un tas sur toute la largeur de la bande en défilement. Une ou plusieurs brosses cylindriques rotatives sont alors prévues en aval de la zone de dépôt en tas des comprimés, l'axe de rotation de ces brosses étant transversal à la direction de défilement de la feuille, de manière à remplir tous les alvéoles à mesure que la bande avance.

Une contrainte rencontrée fréquemment avec ces installations est la nécessité de changer toute la partie de distribution entre le réservoir de stockage et la bande alvéolée lorsque le type de comprimés fabriqués change. D'une part il faut éviter le moindre risque de contamination d'une molécule de comprimé à une autre molécule, et d'autre part il est nécessaire de changer la configuration de distribution lorsque le format des comprimés, et celui de la bande, est sensiblement modifié. Ainsi, alors qu'un équipement avec goulotte reliée à un boîtier ouvert dans sa partie inférieure et muni de brosses rotatives permet d'assurer de façon optimale un remplissage des alvéoles pour des comprimés de format arrondi, un tel mode de remplissage devient inopérant pour des comprimés présentant une forme plus allongée ou rectangulaire.

Pour les formats de ce dernier type, il faut en général utiliser au moins une rampe de distribution dotée de rainures, ou de séparations équivalentes, permettant de pré-positionner les comprimés. II existe déjà des systèmes d'alimentation amenant individuellement le comprimé à conditionner dans chaque alvéole. Les comprimés, guidés par des rampes verticales ou inclinées, vibrantes ou fixes, sont placés individuellement dans les alvéoles de la bande qui défile sous la lyre.

Un inconvénient des installations existantes est qu'il est nécessaire de disposer de plusieurs équipements lourds spécifiques, ces équipements devant être alternativement montés et démontés dans la chaîne de conditionnement à chaque fois que le mode de distribution/répartition des comprimés change. Les opérations de montage-démontage exigent beaucoup de temps et provoquent un arrêt du conditionnement préjudiciable pour la productivité.

Il est également connu par le brevet FR 2 759 346 du même déposant un dispositif de remplissage des alvéoles qui est mobile et adapté à différents types de format, plusieurs éléments fonctionnels pouvant être utilisés et changés dans un même boîtier recouvrant la bande alvéolée. Toutefois, ce type de système ne permet pas d'optimiser la cadence de remplissage des alvéoles, en particulier pour les comprimés à forme allongée ou forme complexe.

Une solution à ces inconvénients a également été proposé par le déposant dans son brevet FR 2 882 987 qui se rapportait à un système modulable de distribution offrant une interchangeabilité entre différentes configurations de distribution, tout en respectant les bonnes pratiques de fabrication exigées dans le domaine pharmaceutique.

Cependant, ce type de dispositif ne donne pas entièrement satisfaction. En effet, son encombrement reste important et rend son intégration difficile sur certaines blistéreuses, sa flexibilité est encore insuffisante, la position figée des actionneurs et des points de fixation des solutions de distributions rendent difficile l'utilisation de nouvelles solutions de distributions, le réglage en hauteur agit simultanément sur la distribution et sur la brosse à coucher les comprimés, et la façade est difficilement nettoyable du fait de la présence de tous les actionneurs et de tous les points d'accroches nécessaires aux différentes distributions.

Un but de la présente invention, décrite dans l'objet de la revendication 1 en annexe, est donc de résoudre les problèmes cités précédemment à l'aide d'une solution.

Plus précisément, la présente invention a pour objet un dispositif modulable de distribution/répartition de comprimés dans des alvéoles d'une bande de conditionnement soumise à un déplacement longitudinal dans un plan sensiblement horizontal d'une machine de conditionnement comportant une blistéreuse, ledit dispositif modulable comportant :
- un bâti adapté pour être monté sur la blistéreuse, ledit bâti comportant une paroi avant d'accrochage disposée de préférence verticalement,
- au moins un accessoire de distribution/répartition desdits comprimés dans les alvéoles de la bande, tel qu'une boîte à brosses rotatives, une rampe fixe, une rampe vibrante, une distribution alternative par tubes, ledit accessoire étant prévu pour être monté de manière amovible sur ledit bâti,
caractérisé en ce qu'il comprend en outre une interface intermédiaire destinée à venir s'accrocher de manière amovible sur le bâti, contre la paroi avant d'accrochage de celui-ci, pour supporter ledit au moins un accessoire, ladite interface renfermant au moins un organe d'entraînement d'un élément mobile du/des accessoire(s) qu'il supporte, ledit au moins un organe d'entraînement étant constitué par un moteur rotatif, un motoréducteur ou un vérin d'actionnement.

Ainsi, le système de l'invention permet une interchangeabilité entre différentes configurations de distribution grâce au caractère amovible par rapport au bâti des éléments de distribution en contact avec les comprimés.

Grâce à cette configuration, non seulement il n'est plus nécessaire d'opérer un démontage fastidieux de l'intégralité de l'équipement de distribution mais il est possible de monter de nombreux types d'accessoires de distribution/répartition. Grâce à cette interface évolutive, diverses options sont proposées sous forme de kits et peuvent ainsi être installées au fur et à mesure des besoins. Par ailleurs, ce sont les interfaces qui comportent les actionneurs qui étaient auparavant situés dans le châssis, ce qui permet en particulier de réduire notablement l'encombrement de ce dernier et notamment sa hauteur. Les interfaces sont généralement manipulables par une personne et leur installation se fait sans outil, en quelques gestes (positionnement, basculement, bridage).

Selon des modes de réalisation préférés de la présente invention :
- les moyens d'accrochage de l'interface sur le bâti sont de type sans utilisation outils et comportent, pour l'interface, au moins un crochet supérieur comportant une surface interne arrondie et, pour la paroi d'accrochage avant du bâti, au moins une protubérance supérieure associée comportant une surface externe arrondie, chaque crochet venant se suspendre au-dessus de la protubérance correspondante de sorte que sa surface interne vient épouser la surface externe de la protubérance ;
- chaque crochet de l'interface comporte une goupille de guidage coopérant avec une rainure ménagée dans la protubérance de la paroi d'accrochage avant du bâti ;
- la paroi avant d'accrochage du bâti est divisée en au moins deux parties d'accrochage indépendantes pouvant recevoir chacune au moins un accessoire amovible, soit par l'intermédiaire d'une même interface montée sur lesdites parties d'accrochage, par exemple pour venir relier une boite longitudinale à brosses, soit par l'intermédiaire de plusieurs interfaces indépendantes, par exemple pour relier une distribution à rampe vibrante sur une première partie d'accrochage amont du bâti et une brosse rotative à coucher les comprimés sur une deuxième partie d'accrochage aval dudit bâti ;

- chaque partie d'accrochage de la paroi avant du bâti comporte ses propres moyens de réglage vertical selon un axe Z ;
- lesdits moyens de réglage vertical comportent un bouton de manipulation agissant sur au moins un rail solidaire de ladite partie d'accrochage concernée et coulissant sur au moins une glissière de guidage vertical correspondante solidaire du bâti, et un indicateur numérique de déplacement gradué en dixièmes de millimètre ;
- l'une et/ou l'autre des parties d'accrochage de la paroi du bâti comporte(nt) également des moyens de réglage horizontal en profondeur selon un axe Y ;
- lesdits moyens de réglage horizontal en profondeur comportent un bouton de manipulation agissant sur au moins une glissière solidaire de ladite partie concernée et coulissant sur au moins un rail de guidage horizontal correspondant solidaire du bâti, et un indicateur numérique de déplacement gradué en dixièmes de millimètre ;
- l'un et/ou l'autre des différents moyens de réglage est/sont motorisé(s) ;
- l'une et/ou l'autre des parties d'accrochage de la paroi du bâti est/sont en outre équipée(s) de moyens automatisés de déplacement vertical alternatif en cycle carré entre deux positions prédéterminées, et ce indépendamment des moyens de réglage vertical ;
- la paroi avant d'accrochage et l'interface intermédiaire comportent respectivement chacune au moins un module de connexion, lesdits modules venant se connecter l'un à l'autre en position montée de l'interface intermédiaire sur ladite paroi d'accrochage afin de piloter le/les organe(s) d'entraînement disposé(s) à l'intérieur de l'interface ;
- chaque module de connexion comporte des connecteurs Harting mâle et femelle, des connecteurs pneumatiques et au moins un doigt de guidage coopérant avec un orifice correspondant pour faciliter l'alignement des connecteurs lors de la mise en place de l'interface intermédiaire sur la paroi d'accrochage ;
- la paroi du bâti comporte trois connecteurs Harting de type femelle entourés latéralement de deux orifices, tandis que l'interface intermédiaire comporte trois connecteurs Harting de type mâle entourés latéralement de deux doigts de guidage prévu pour s'insérer dans lesdits orifices ;
- la paroi avant d'accrochage comporte plusieurs modules de connexion alignés horizontalement ; et
- les modules de connexion comportent des silentblocs leur permettant de s'aligner l'un avec l'autre lors du montage d'une interface sur la paroi d'accrochage.

Ainsi, l'utilisation de ces connecteurs améliore la liberté de conception pour la création de nouvelles solutions de distributions, permet l'acquisition au fur et à mesure des différentes interfaces suivant les besoins, autorise l'échange d'interfaces d'une ligne de conditionnement blister à une autre, même si elles sont de marques différentes, et limite le nombre d'usinages sur les parois, facilitant ainsi le nettoyage des façades.

Avantageusement, le dispositif comporte des moyens de serrage de l'interface intermédiaire en position accrochée sur le bâti, par exemple une manette de bridage disposée latéralement sur une tranche externe du bâti.

Selon une caractéristique supplémentaire, chaque accessoire est relié de manière amovible à l'interface intermédiaire par fixation de type encliquetage sur une paroi verticale avant de cette dernière, et se connecte à/aux organe(s) d'entraînement associé(s) de ladite interface.

De manière préférée, l'ensemble du bâti présente des moyens de réglage longitudinal de sa position selon un axe X, qui peuvent être motorisés.

Avantageusement, ces moyens comportent deux rails parallèles solidaires du bâti sur lesquels coulissent deux glissières solidaires de la structure porteuse et un réglet de mesure. Conformément à l'invention, les organes d'entraînement sont des moteurs rotatifs, des motoréducteurs ou des vérins d'actionnement.

L'invention se rapporte également à une machine de conditionnement comportant notamment une blistéreuse pourvue d'une structure porteuse et d'un rail de distribution le long duquel circule une bande de conditionnement à alvéoles soumise à un déplacement longitudinal dans un plan sensiblement horizontal, et un dispositif modulable de distribution/répartition de comprimés dans lesdits alvéoles tel que décrit précédemment, l'accessoire étant placé au-dessus de la bande alvéolée.

Avantageusement, le dispositif machine comporte en outre un pupitre de commande à écran tactile, déporté ou monté directement sur le dispositif ou sur la structure porteuse de la blistéreuse, de sorte que les accessoires sont dépourvus de moyens de pilotage.

L'invention va maintenant être décrite plus en détail en référence à des modes de réalisation particuliers donnés à titre d'illustration uniquement et représentés sur les figures annexées dans lesquelles
- La figure 1 est une vue schématisée en perspective d'une machine de distribution/répartition de comprimés conforme à la présente invention ;
- La figure 2 est une vue de face de la figure 1 ;
- La figure 3 est une vue de dessus de la figure 1 ;
- La figure 4 est une vue de dos de la figure 1 ;
- La figure 5 est une vue en perspective éclatée d'un dispositif de distribution/répartition de comprimés appartenant à la machine de la figure 1 ;
- La figure 6 est une vue de dessous de la figure 5 ;
- La figure 7 est une vue de côté en perspective éclatée de la figure 5 ;
- La figure 8 est une autre vue en perspective éclatée sensiblement similaire à la figure 5 ;
- La figure 9 est une vue de dos de la figure 8 ;
- La figure 10 est une vue similaire à la figure 5 mais dans laquelle des interfaces intermédiaires sont montées sur le dispositif de distribution/répartition ;
- La figure 11 est une vue partielle en perspective éclatée de la figure 10 ;
- La figure 12 est une vue de dos de la figure 11 ;
- La figure 13 est une variante de réalisation de la figure 10 ;
- La figure 14 est une autre variante de réalisation de la figure 10 ;
- La figure 15 est une vue similaire à la figure 154 dans laquelle un accessoire adapté est monté ;
- La figure 16 est une vue de détail de la figure 11 ;
- La figure 17 est une vue de détail de la figure 12 ;
- La figure 18 est une vue en perspective de la figure 12 ;

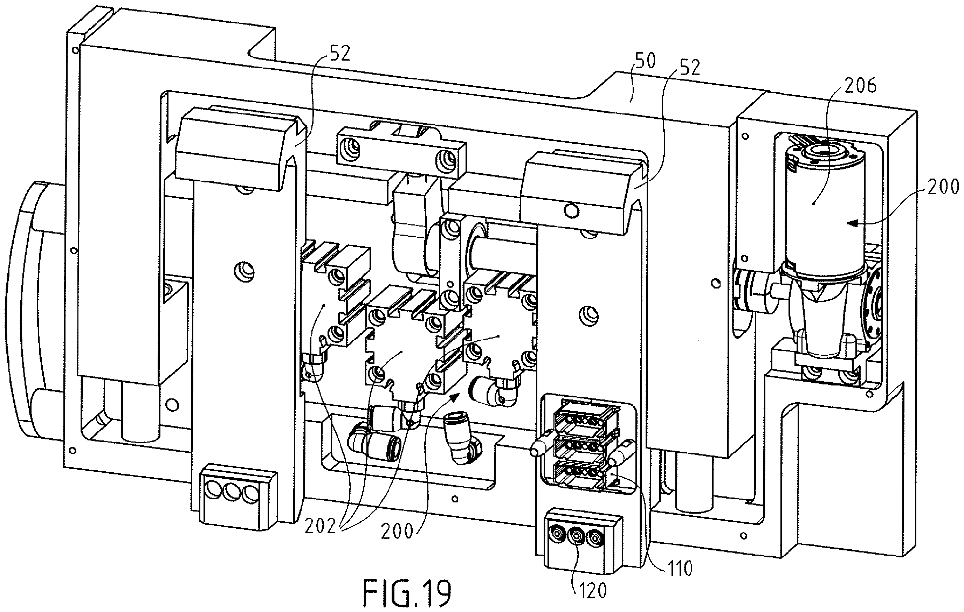

- La figure 19 est une vue intérieure de l'interface des figures 10 à 12 ;
- Les figures 20 à 25 sont des vues montrant différentes étapes d'accrochage d'une interface intermédiaire appartenant au dispositif ;
- La figure 26 est une vue de détail de la figure 20 ;
- La figure 27 est une vue intérieure en coupe longitudinale partielle de la figure 13 ; et
- La figure 28 est une vue intérieure en coupe transversale partielle de la figure 13.

Dans l'exemple représenté et décrit ci-après, l'invention est appliquée à la distribution de comprimés dans une installation de conditionnement. Bien entendu, l'invention s'applique de la même façon à la distribution de gélules, capsules ou autres produits devant être répartis dans des bandes alvéolées. Aussi, dans la suite de la description les comprimés pourront être compris comme désignant de manière générale ce type de produits.

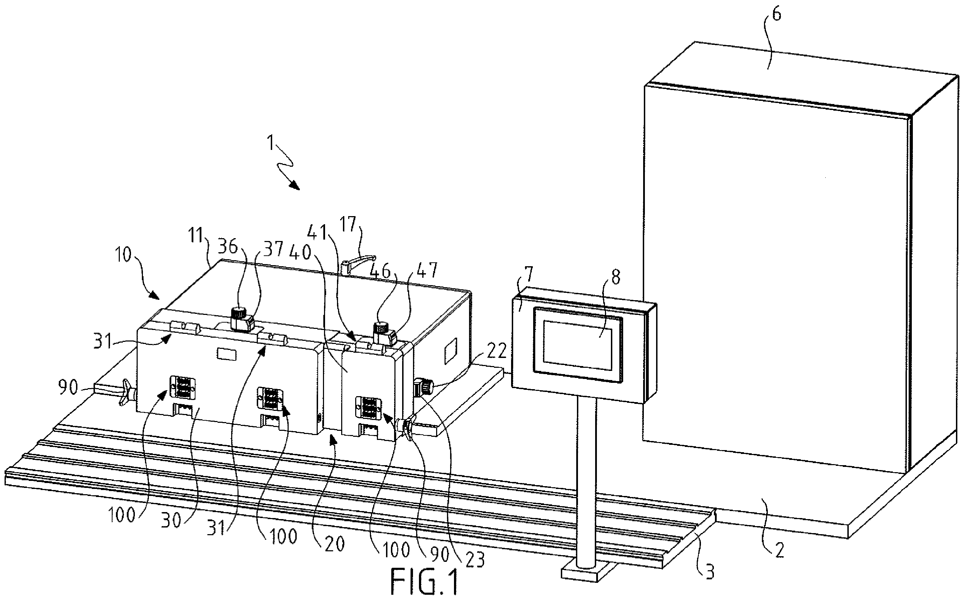

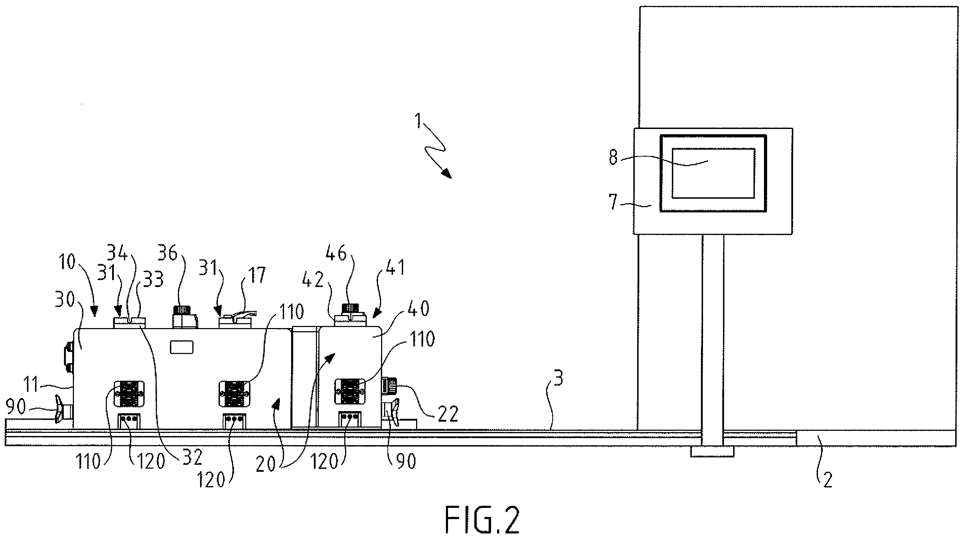

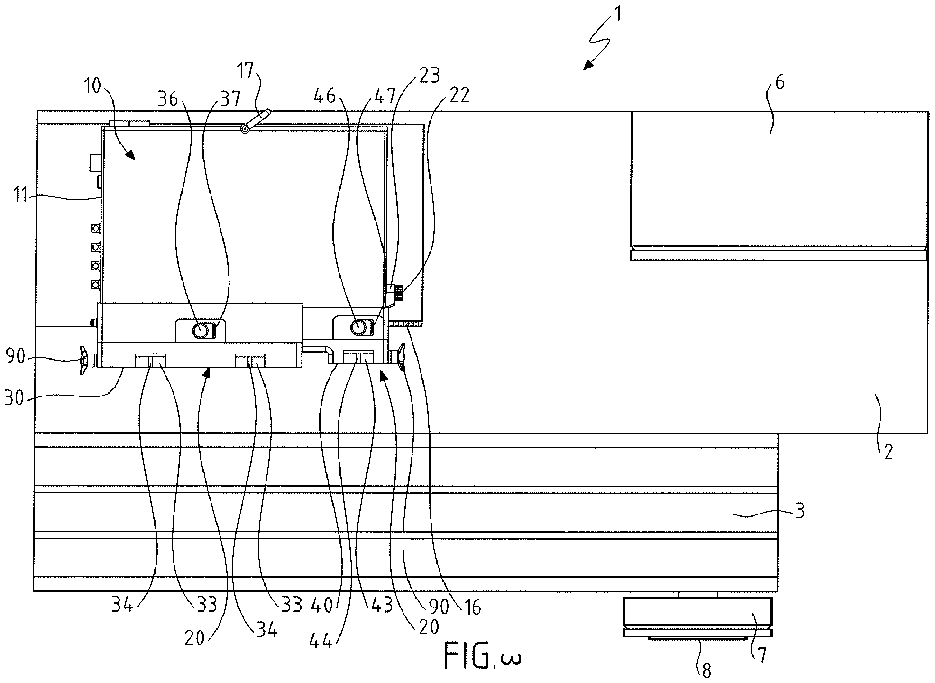

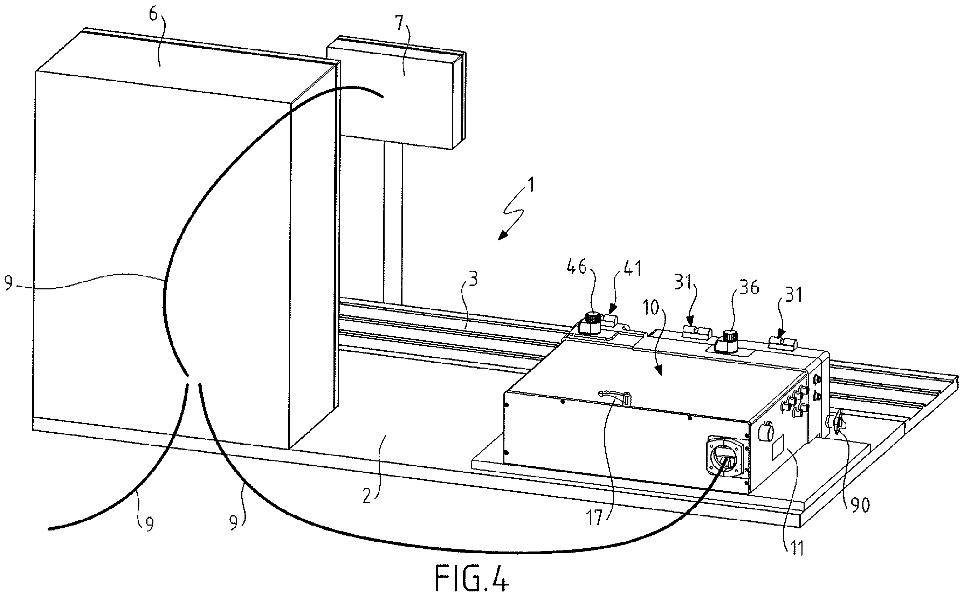

Les figures 1 à 4 représentent une machine de conditionnement comportant notamment :
- une blistéreuse 1 pourvue d'une structure porteuse 2 et d'un rail de distribution 3 monté sur ladite structure porteuse 2 et le long duquel une bande alvéolée de conditionnement de type connue se déplace longitudinalement dans un plan sensiblement horizontal,
- un dispositif modulable 10 de distribution/répartition de comprimés dans lesdits alvéoles pourvu d'une armoire électrique 6 et d'un pupitre de commande 7 à écran tactile 8, et
- diverses liaisons électriques 9 reliant l'armoire électrique 6 à la blistéreuse 1, au dispositif 10 de distribution/répartition de comprimés et au pupitre d commande 7.

Comme cela est visible sur la majorité des figures, le dispositif 10 comporte un bâti 11 destiné à être monté sur la structure porteuse 2 de la blistéreuse 1 et présente une paroi avant d'accrochage 20 destinée à supporter de manière amovible des accessoires de distribution/répartition de comprimés de type connu.

Plus précisément, la paroi avant d'accrochage 20 est divisée longitudinalement en deux parties distinctes 30 et 40 pouvant chacune supporter un ou plusieurs accessoire(s), comme cela sera expliqué ultérieurement.

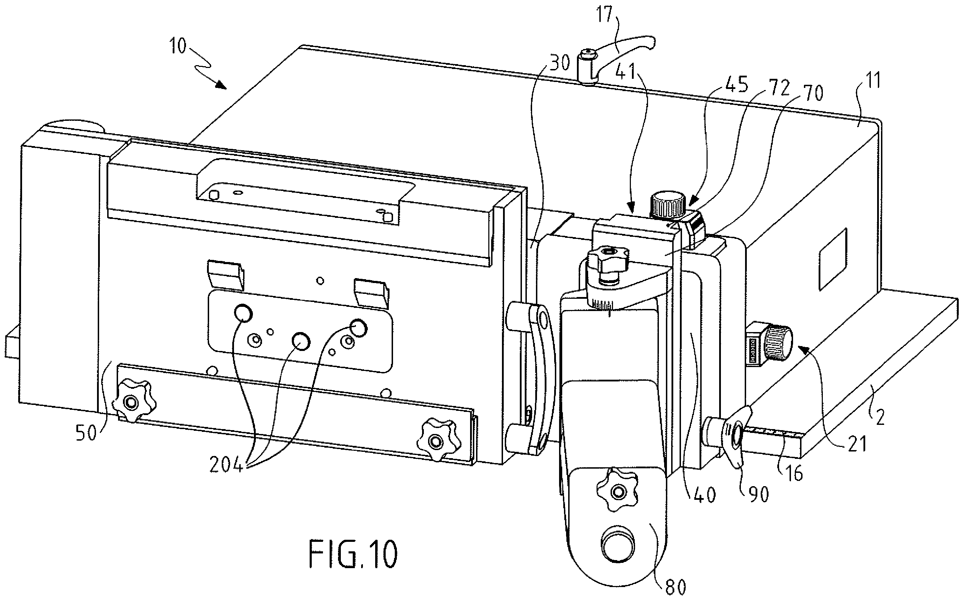

Ainsi, conformément aux figures 10 à 12, la première partie amont 30 de la paroi d'accrochage 20 selon le sens de circulation de la bande alvéolée comporte à cet effet des moyens d'accrochage 31 d'une première interface intermédiaire 50, tandis que la deuxième partie aval 40 de la paroi d'accrochage 20 comporte des moyens d'accrochage 31 d'une deuxième interface intermédiaire 70.

Plus précisément, ces moyens d'accrochage 31, de type sans utilisation d'outils et donc entièrement manipulable manuellement, comportent deux protubérances supérieures 32 présentant chacune une surface externe arrondie 33.

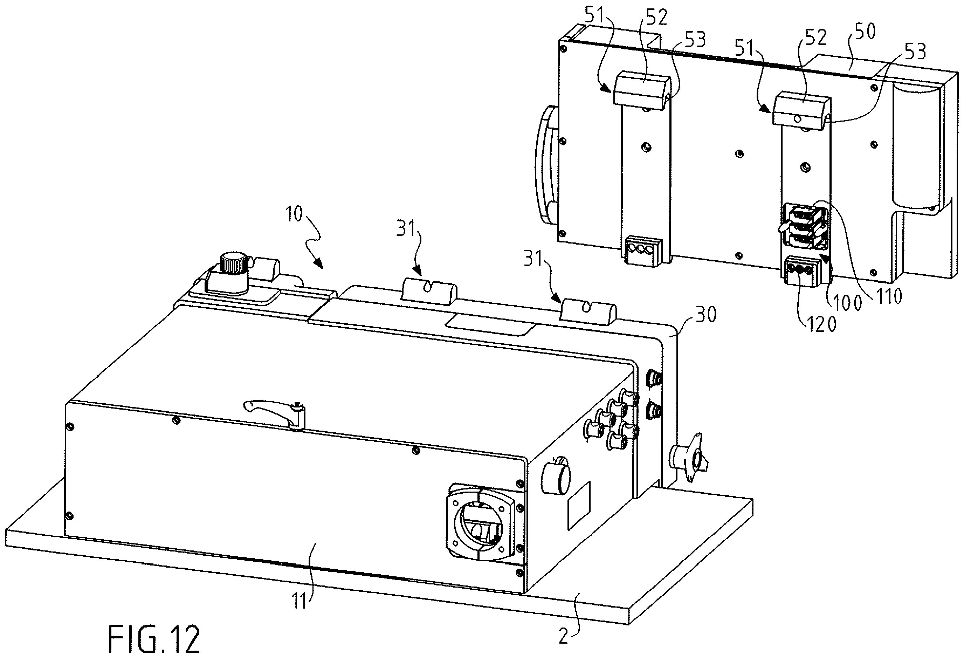

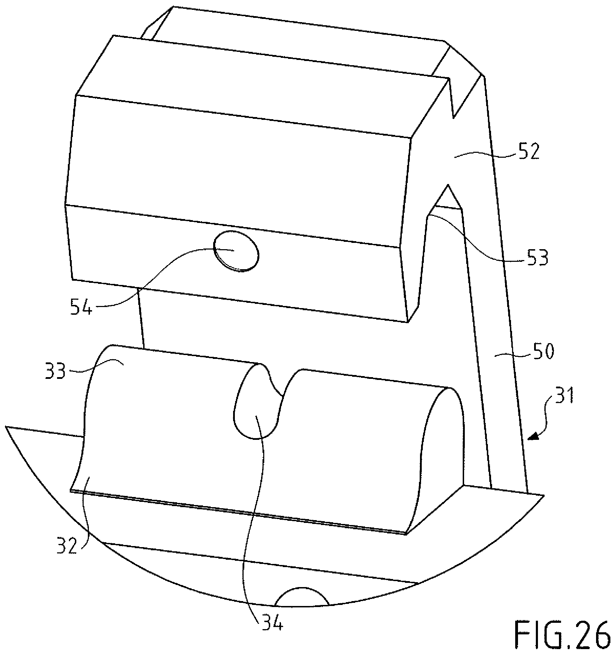

En parallèle, comme cela est représenté sur la figure 12, l'interface intermédiaire 50 est pourvue de moyens d'accrochage complémentaires 51 comportant deux crochets supérieurs 52 présentant chacun une surface interne arrondie 53 coopérant avec la surface externe 33 de la protubérance 32 correspondante lorsque l'interface 50 est suspendue à la première partie 30 de la paroi d'accrochage 20. Afin que l'interface intermédiaire 50 puisse être montée facilement et rapidement par l'utilisateur, chacun des crochets 52 de l'interface comporte une goupille de guidage 54 coopérant avec une rainure ménagée 34 dans chacune des protubérances 32 de la première partie 30 de la paroi d'accrochage 20, comme illustré plus en détail sur la figure 26. Dans le mode de représentation illustré, la première interface 50 supporte par exemple une distribution à tubes de type connu et non représentée.

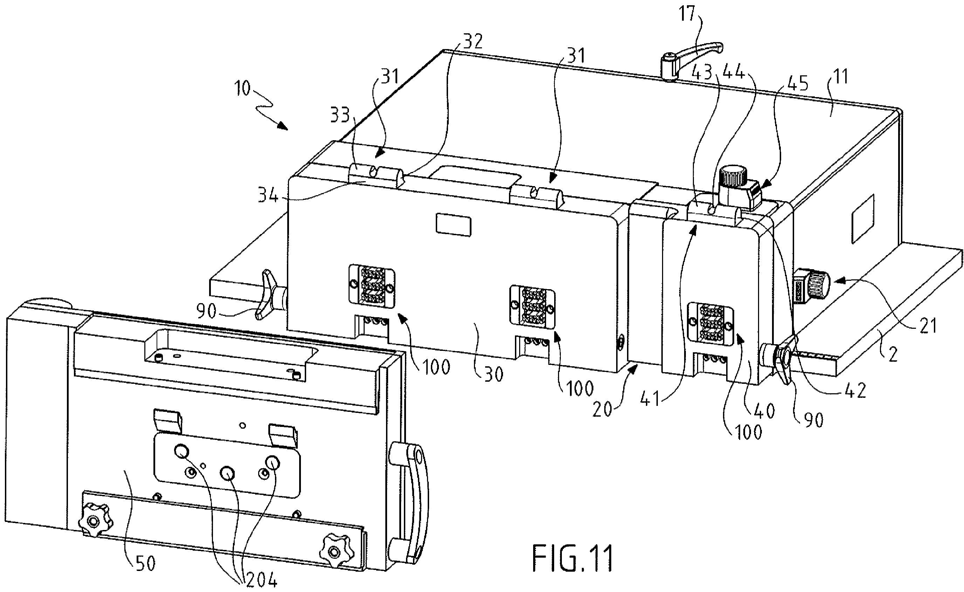

De la même façon, comme cela est visible sur la figure 11, la deuxième partie 40 de la paroi d'accrochage 20 est pourvue de moyens d'accrochage 41 comportant une seule protubérance supérieure 42 présentant une surface externe arrondie 43 munie d'une rainure 44 de manière à supporter une deuxième interface 70 présentant un crochet 72 identique aux crochets 52 de la première interface 50. Dans le mode de représentation illustré, la deuxième interface intermédiaire 70 supporte par exemple une brosse rotative 80 à coucher les comprimés de type connu.

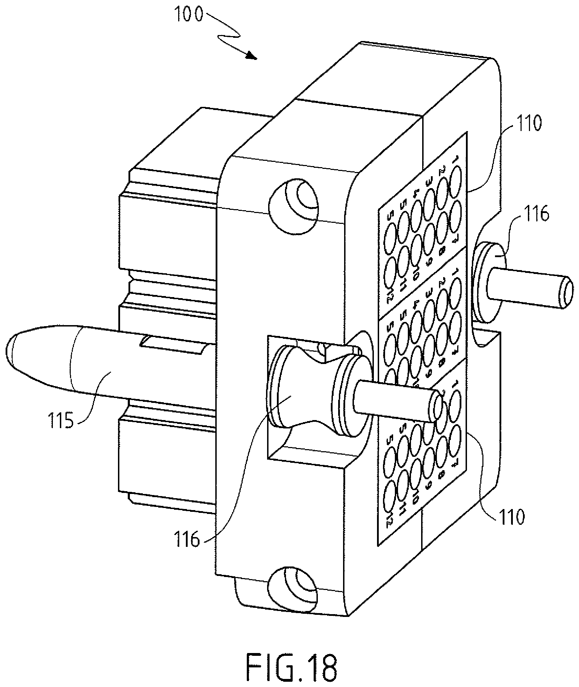

Une première caractéristique importante de cette invention réside dans le fait que chaque interface intermédiaire renferme des organes d'entraînement 200 initialement disposés dans le bâti 11 du dispositif 1. Ainsi, comme cela est visible sur la figure 18, selon le mode de réalisation des figures 10 à 12, l'interface 50 renferme des vérins 202 se prolongeant sur la surface externe de ladite interface par des doigts d'actionnement 204, par exemple destinés à actionner des tiroirs mobiles de cassettes d'une distribution à tubes (de type connue et donc non représentée), et un motoréducteur 206, par exemple utilisé pour imposer un mouvement d'oscillation d'une trémie de distribution (de type connue et non représentée).

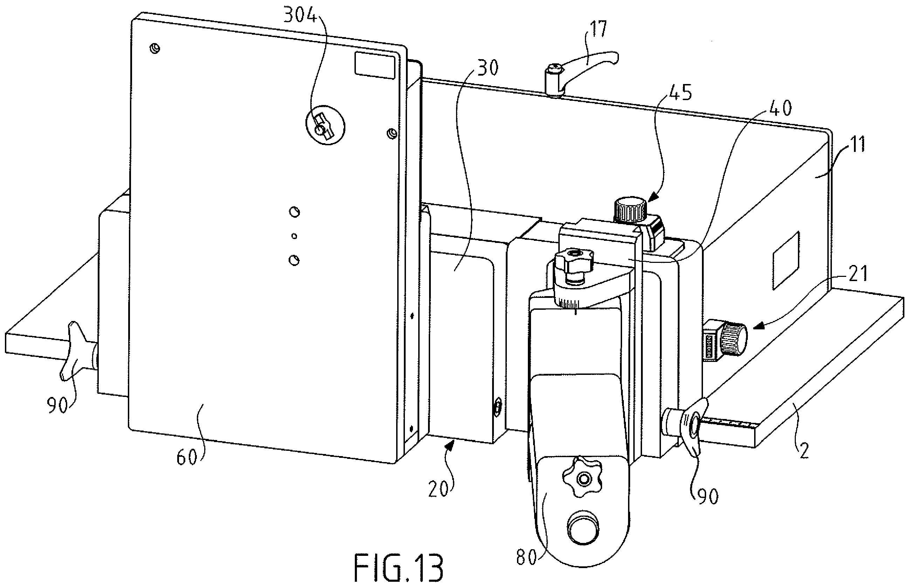

Selon une première variante de réalisation illustrée par la figure 13, une autre première interface intermédiaire 60 est suspendue à la première partie 30 de la paroi d'accrochage 20, avec le même type de moyens d'accrochage à crochets et protubérances que ceux décrits précédemment en relation avec les figures 10 à 12. Dans ce cas présent, cette interface intermédiaire 60 permet de supporter une distribution par rampe fixe de type connu et non représentée, dont des éléments internes mobiles peuvent être mis en rotation par l'intermédiaire d'un doigt en saillie 304.

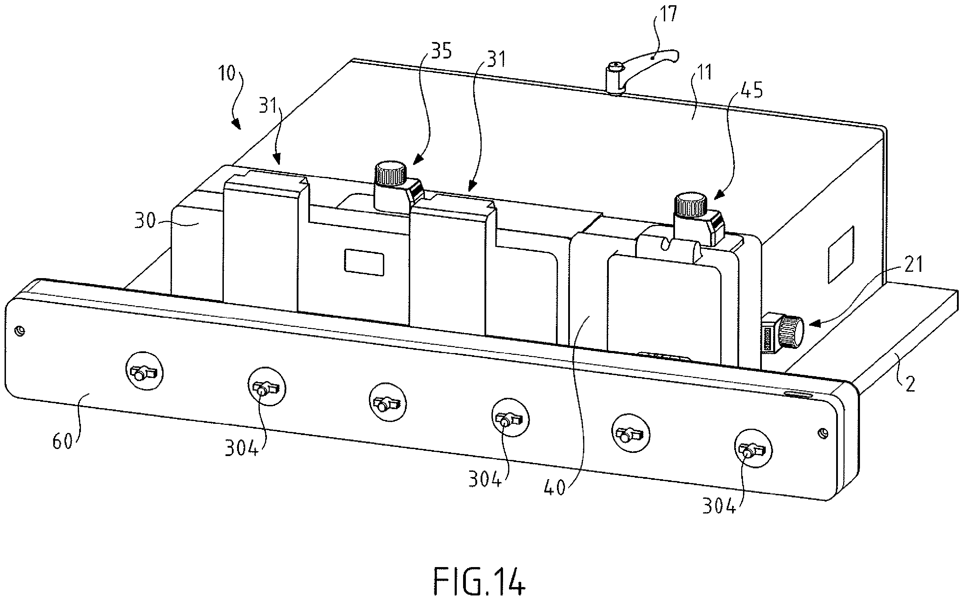

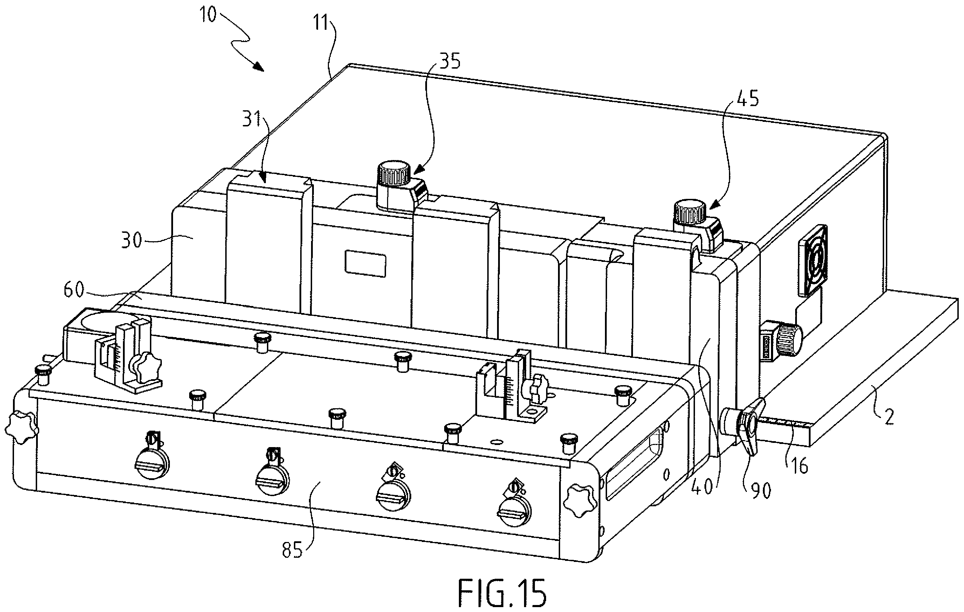

Selon un troisième mode de réalisation illustré par la figure 14, la première interface 60 est suspendue à la première partie amont 30 de la paroi d'accrochage 20 mais s'étend sur toute la longueur du dispositif 10 de sorte qu'elle est également positionnée devant la deuxième partie aval 40 de la paroi d'accrochage 20. Dans ce cas, il peut s'agir d'une distribution de type boîte à brosses 85 telle que celle représentée sur la figure 15, lesquelles brosses sont alors mises en rotation par l'intermédiaire de différents doigts faisant saillie 304 de l'interface 60 et mis en rotation par des moteurs internes à ladite interface.

Un autre élément important de la présente invention est la présence de modules de connexion 100 de type mâle/femelle venant se connecter, lorsque chaque interface est correctement positionnée, afin de piloter les organes internes d'entraînement prévus dans lesdites interfaces.

Ainsi, comme cela est visible sur les figures 1, 2, 5, 6, et également plus spécifiquement sur les vues de détail 16 à 18, ces modules de connexion 100 mâle/femelle comprennent par exemple des connecteurs de type Harting 110 (mâle et femelle) et des connecteurs pneumatiques 120 (mâle et femelle). Plus précisément, la première partie (la plus large) 30 de la paroi d'accrochage 20 est pourvue de deux modules de connexion 100 comportant chacun trois connecteurs Harting 110 de type femelle à douze broches et un connecteur pneumatique de type femelle à 3 broches pour venir coopérer avec les connecteurs Harting 110 et pneumatiques 120, respectivement de type mâle, de l'interface intermédiaire associée 50 ou 60. La deuxième partie 40 de la paroi d'accrochage 20 comporte quant à elle un seul module de connexion 100 coopérant avec celui de la deuxième interface intermédiaire 70.

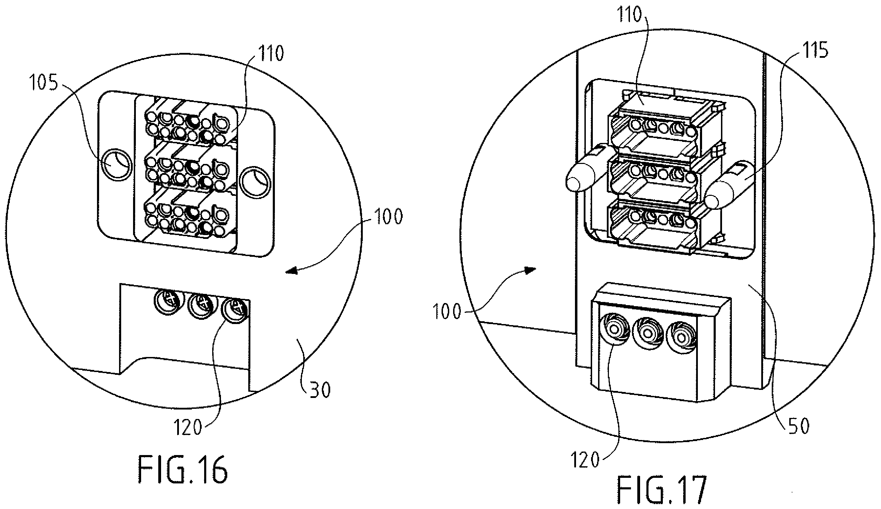

Afin de permettre une connexion optimisée entre les deux parties de chaque module de connexion 100, ceux-ci sont pourvus, pour ce qui concerne la paroi d'accrochage 30 ou 40, d'un orifice 105 et, pour ce qui concerne l'interface intermédiaire 50, 60 ou 70, de doigts de guidage 115 coopérant avec lesdits orifices 105. Avantageusement les doigts 115 et les orifices 105 sont disposés de part et d'autres des broches des connecteurs Harting 110, comme cela est visible sur les figures 15 et 16.

Par ailleurs, comme illustré sur la figure 18, l'arrière des modules de connexion 100 de chaque interface (quel qu'il soit) comportent des silentblocs 116 en forme de diabolo montés sur l'arrière des doigts de guidage 115. Ceci permet, lors du montage de l'interface qui sera décrit ci-après, de créer des degrés de liberté selon les axes Y et Z pour le module de connexion 100 de l'interface considérée.

Les vues de détails 20 à 25 illustrent la mise en place d'une interface intermédiaire sur la paroi avant 20 du bâti 11 du dispositif 10 de distribution/répartition de comprimés, et plus précisément la mise en place de l'interface intermédiaire 50 sur la première partie 30 de ladite paroi. Cette installation se fait sans outils et de manière très simple. Elle ne nécessite que quelques gestes qui sont par ailleurs guidés par certains éléments prévus à cet effet sur l'interface et le dispositif.

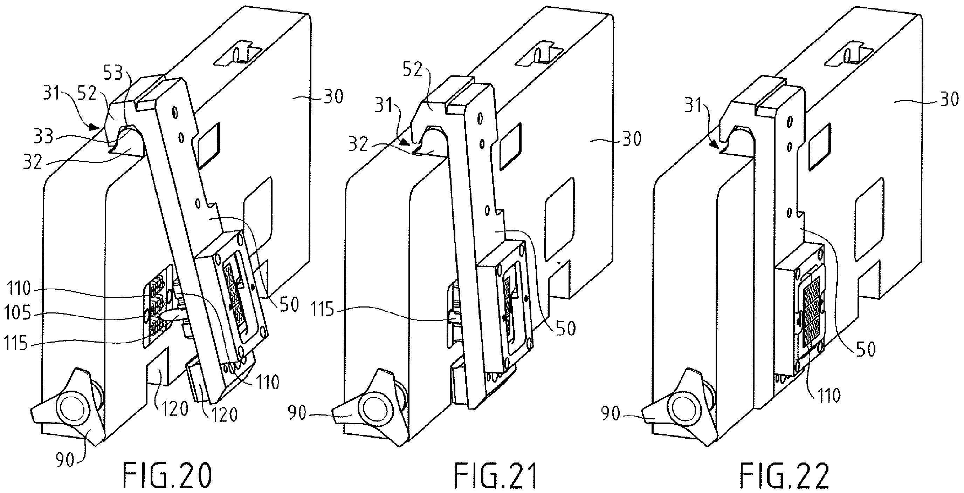

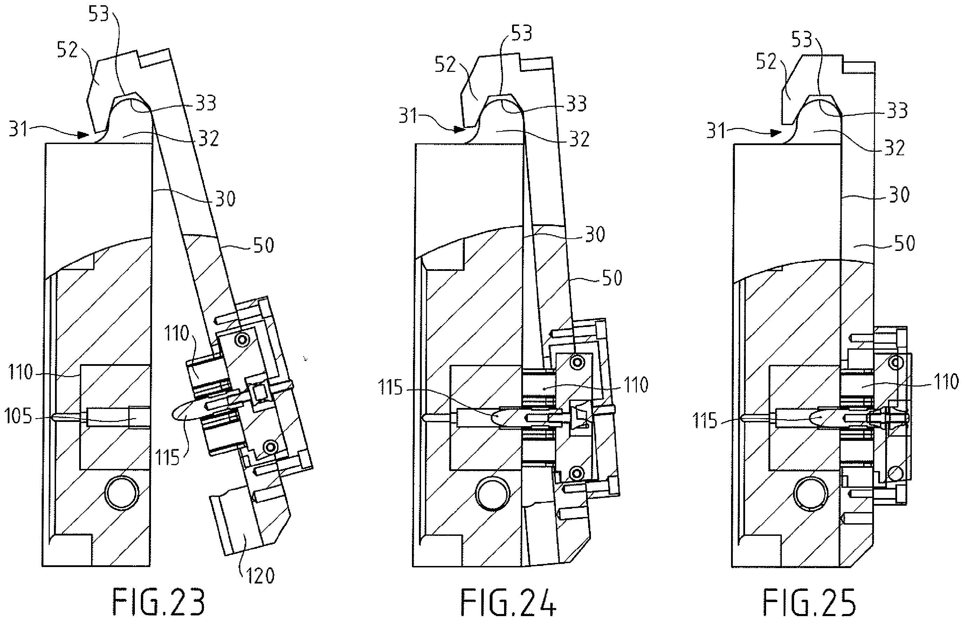

Ainsi, dans un premier temps, (figures 20 et 23), l'utilisateur approche l'interface intermédiaire concernée de la première partie 30 de la paroi d'accrochage en l'inclinant (quelques degrés à plusieurs dizaines de degrés) afin de faire coopérer les surfaces arrondie 33 et 53 des moyens d'accrochage respectifs 31 et 51. L'utilisateur est guidé dans sa manœuvre par la coopération de la goupille 54 et de la fente 34 (voir figure 26.

Dans un second temps (figures 21 et 24), l'interface 50 pivote petit à petit sous son propre poids et se rapproche de la première partie 30 de la paroi avant 20. Lors de ce mouvement, les doigts 115 des modules de connexion 100 de l'interface 50 viennent se positionner en face des orifices 105 des modules de connexion 100 de la première partie 30 de la paroi d'accrochage 20, tandis que les silentblocs 116 assistent le pivotement module de connexion 100 de l'interface en se déformant. Ceci permet aux connecteurs de Harting de type mâle 110 de l'interface 50 de s'aligner avec les connecteurs de Harting de type femelle 110 de la première partie 30 de la paroi d'accrochage.

Enfin, dans un troisième temps (figures 22 et 25), l'interface intermédiaire 50 continue de rapprocher de la première partie 30 de la paroi d'accrochage 20 de sorte que les broches des connecteurs Harting 110 et des connecteurs pneumatiques 120 des modules de connexion 100 se connectent. Ceci permet aux organes d'entraînement 200 d'être pilotés par l'intermédiaire du pupitre de commande 7.

L'utilisateur peut alors verrouiller l'interface installée sur la paroi d'accrochage 20 à l'aide d'une des manettes de bridage 90 prévues sur la/les tranche(s) latérale(s) de chaque partie 30 et 40 de la paroi d'accrochage 20. La manette 90 amont permet de verrouiller une interface intermédiaire sur la première partie 30 de la paroi d'accrochage avant 20 tandis que la manette 90 aval permet de verrouiller une interface intermédiaire sur la deuxième partie 40 de la paroi d'accrochage avant 20.

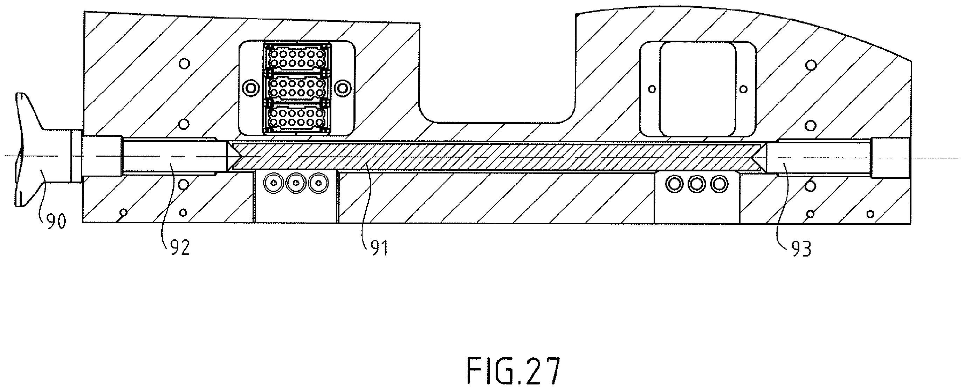

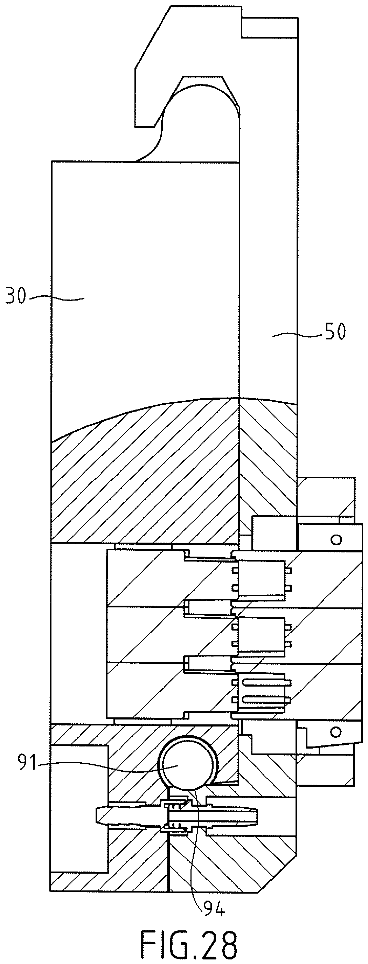

Comme cela est représenté sur les figures 27 et 28, ce système de bridage comporte schématiquement une colonne de bridage 91 et des vis mobile 92 et fixes. Lorsque la manette 90 est tournée dans le sens du blocage (sens des aiguilles d'une montre de préférence), la vis mobile 92 vient pousser la colonne 91 vers la vis fixe 93 de sorte que ladite colonne 91 vient se centrer d'elle-même sur lesdites vis et est contrainte à prendre une position de blocage où elle vient se loger naturellement dans une zone en creux arrondie 94 de l'interface 50 lorsque celle-ci est correctement positionnée (figures 20 et 23). Lors du desserrage des manettes de bridage 90, la colonne 91 est libérée et elle peut alors se lever au passage de l'interface.

L'interface peut utiliser des éléments de sécurité ou des capteurs, par exemple de fin de course des vérins d'actionnement 202, pilotés par l'intermédiaire des prises Harting 110 des modules de connexion 100.

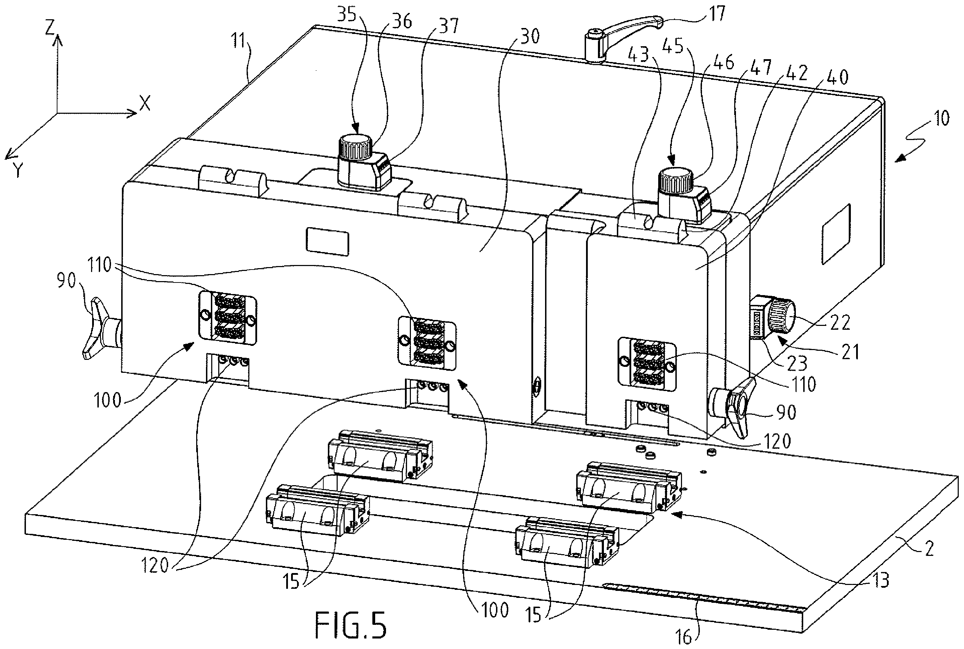

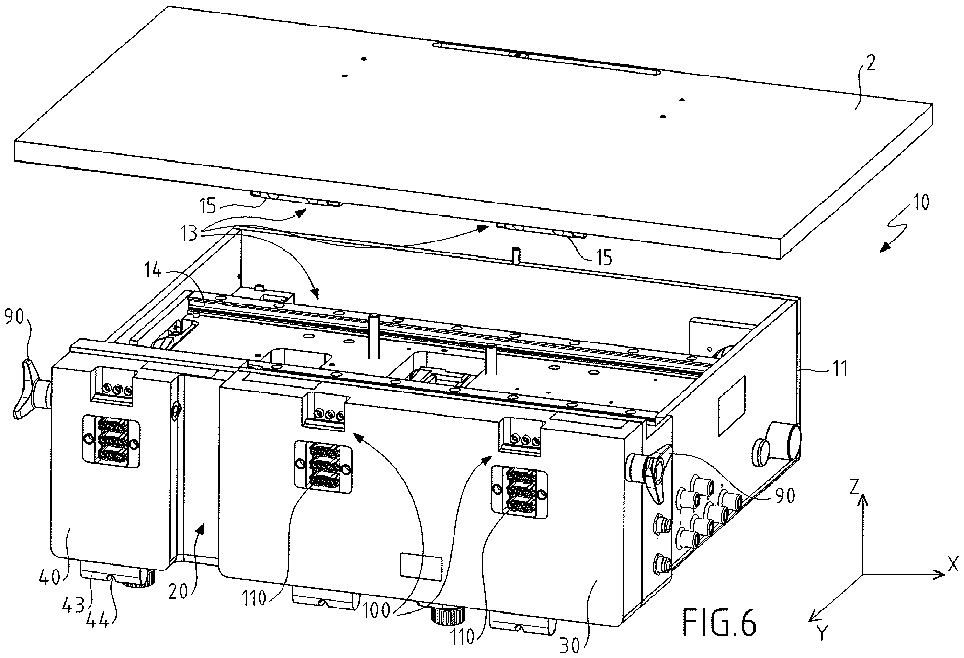

Comme cela est visible sur les figures 5 et 6, l'ensemble du bâti 11 du dispositif de distribution/répartition 10 présente des moyens 13 de réglage longitudinal de sa position selon un axe X.

Pour cela, l'intérieur du bâti 11 est pourvu de deux rails parallèles 14 tandis que la structure porteuse 2 comporte deux paires de glissières 15 pouvant coulisser longitudinalement dans les rails 14 ainsi qu'un réglet de mesure de la position 16. Le déplacement linéaire du bâti 11 peut se faire manuellement ou de manière assistée par une motorisation auxiliaire. Le blocage/déblocage du bâti 11 par rapport à la structure porteuse 2 est effectué par exemple par une poignée rotative 17. La course de déplacement est par exemple de 200 mm. Dans le cas où le réglage est motorisé, le pilotage du déplacement du dispositif 10 peut alors se faire via l'interface de commande 7 et la poignée 17 disparaît.

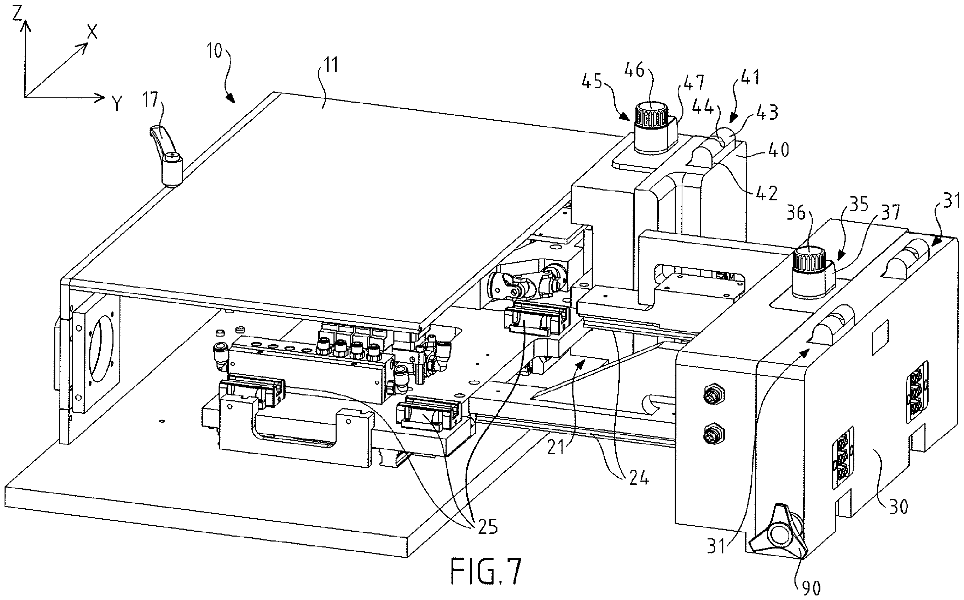

De la même façon, la première partie 30 de la paroi d'accrochage avant 20 du bâti 11 comporte (nt) des moyens 21 de réglage horizontal en profondeur selon un axe Y, comme illustré notamment par la figure 7. Plus précisément, lesdits moyens 21 de réglage horizontal en profondeur comportent un bouton de manipulation 22 (voir par exemple les figures 1, 2, 4 et 5) agissant sur des glissières 24 solidaires de ladite partie de paroi concernée et coulissant sur des rails de guidage horizontal 25 solidaires du bâti 11, ainsi qu'un indicateur numérique 23 de déplacement gradué en dixième de millimètre. La course de déplacement selon l'axe Y est par exemple de 30 mm.

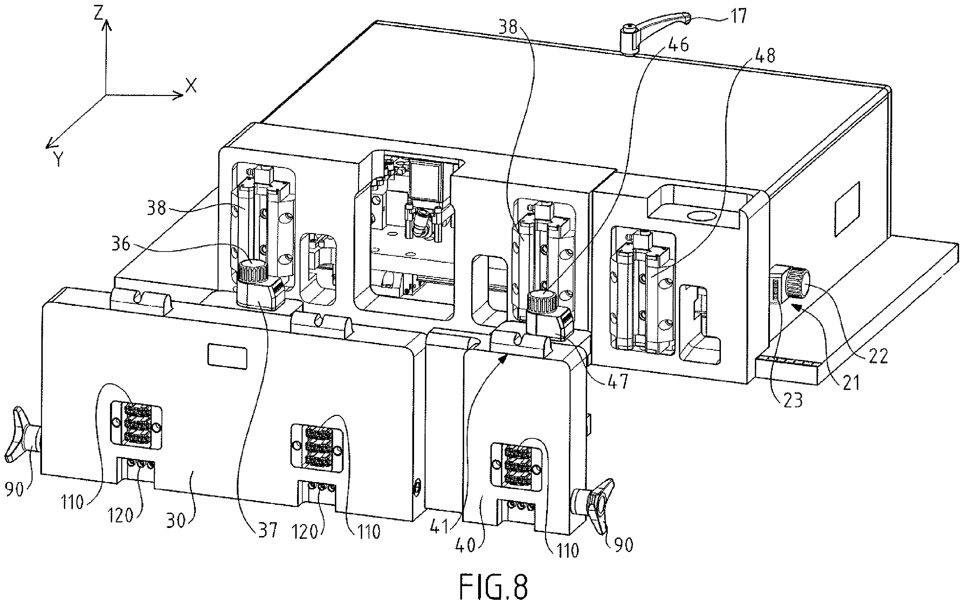

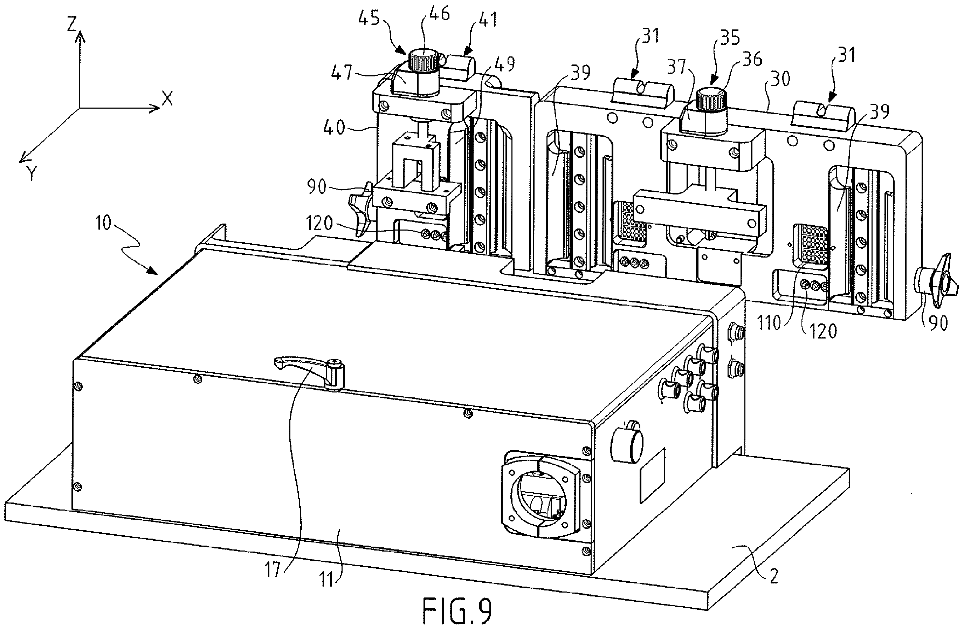

Enfin, chaque partie 30 et 40 de la paroi d'accrochage avant 20 du bâti 11 comporte ses propres moyens de réglage vertical selon un axe Z, comme illustré sur les figures 8 et 9.

Plus précisément, la partie d'accrochage 30 comporte des moyens 35 de réglage vertical comportant un bouton de manipulation 36 agissant sur deux rails 39 solidaires de ladite partie d'accrochage et coulissant sur deux glissières de guidage vertical 38 solidaires du bâti 11, ainsi qu'un indicateur numérique de déplacement 37 gradué en dixième de millimètre. La course de déplacement selon l'axe Z est par exemple de 30 mm.

De même, la partie d'accrochage 40 comporte des moyens 45 de réglage vertical comportant un bouton de manipulation 46 agissant sur un rail 49 solidaire de ladite partie d'accrochage et coulissant sur une glissière de guidage vertical 48 solidaire du bâti 11, ainsi qu'un indicateur numérique de déplacement 47 gradué en dixième de millimètre. La course de déplacement selon l'axe Z est par exemple de 15 mm.

Avantageusement, les différents moyens de réglage 13, 21, 35 et 45 selon les axes X, Y et Z peuvent être motorisés. Dans ce cas, les boutons de manipulation et l'indicateur numérique associé disparaissent et le pilotage du déplacement peut alors se faire via l'interface de commande 7.

Par ailleurs, l'une et/ou l'autre des parties d'accrochage 30 et 40 de la paroi 20 du bâti 11 est/sont en outre équipée (s) de moyens automatisés de déplacement vertical alternatif en cycle carré entre deux positions prédéterminées, et ce indépendamment des moyens de réglage vertical 35 et 45.

Dans le cas de la première partie 30 de la paroi d'accrochage 20, ce perfectionnement peut être utile pour programmer différentes positions afin de modifier automatiquement la position des distributions par rapport à la bande alvéolée suivant les besoins (par exemple pour les distributions à tubes, la distribution se lève lors du défilement de la bande et se baisse lors de la dépose des comprimés dans les alvéoles).

Dans le cas de la deuxième partie 40 de la paroi d'accrochage 20, l'utilisation d'un cycle carré prédéterminé peut permettre à la brosse à coucher les comprimés de brosser la bande pendant son arrêt et de se relever pendant que la bande défile.

Il doit être bien entendu que la description détaillée de l'objet de l'Invention, donnée uniquement à titre d'illustration, ne constitue en aucune manière une limitation, les équivalents techniques étant également compris dans le champ de la présente invention, telle que définie dans l'objet de la revendication 1 en annexe.

Ainsi, le nombre de modules de connexion peut varier selon les besoins.

De même, la deuxième partie 40 de la paroi d'accrochage avant 20 peut être réglable selon l'axe Y avec des moyens similaires aux moyens 21 de la première partie 30.

Le nombre de connecteurs Harting peut être inférieur ou supérieur au trois illustré sur les figures, par exemple deux ou quatre.

## Revendications

1. Dispositif (10) modulable de distribution/répartition de comprimés dans des alvéoles d'une bande de conditionnement soumise à un déplacement longitudinal dans un plan sensiblement horizontal d'une machine de conditionnement comportant une blistéreuse (1), ledit dispositif modulable comportant :
- un bâti (11) adapté pour être monté sur la blistéreuse (1), ledit bâti (11) comportant une paroi avant d'accrochage (20) disposée de préférence verticalement,
- au moins un accessoire (80 ; 85) de distribution/répartition desdits comprimés dans les alvéoles de la bande, tel qu'une boîte à brosses rotatives, une rampe fixe, une rampe vibrante, une distribution alternative par tubes, ledit accessoire étant prévu pour être monté de manière amovible sur ledit bâti,
**caractérisé en ce qu'**il comprend en outre une interface intermédiaire (50 ; 60 ; 70) destinée à venir s'accrocher de manière amovible sur le bâti (11), contre la paroi avant d'accrochage (20) de celui-ci, pour supporter ledit au moins un accessoire (80 ; 85) et **en ce que** ladite interface (50 ; 60 ; 70) renferme au moins un organe d'entraînement (200) d'un élément mobile du/des accessoire(s) qu'il supporte, ledit au moins un organe d'entraînement (200) étant constitué par un moteur rotatif, un motoréducteur (206) ou un vérin d'actionnement (202).

2. Dispositif (10) selon la revendication 1, **caractérisé en ce que** les moyens d'accrochage (31 ; 41 ; 51) de l'interface (50 ; 60 ; 70) sur le bâti (11) sont de type sans utilisation outils et comportent, pour l'interface (50 ; 60 ; 70), au moins un crochet supérieur (52) comportant une surface interne arrondie (53) et, pour la paroi d'accrochage avant (20) du bâti (11), au moins une protubérance supérieure (32 ; 42) associée comportant une surface externe arrondie (33 ; 43), chaque crochet (52) venant se suspendre au-dessus de la protubérance correspondante (32 ; 42) de sorte que sa surface interne (53) vient épouser la surface externe (33 ; 43) de la protubérance (32 ; 42).

3. Dispositif (10) selon la revendication 2, **caractérisé en ce que** chaque crochet (52) de l'interface comporte une goupille de guidage (54) coopérant avec une rainure (34 ; 44) ménagée dans la protubérance (32 ; 42) de la paroi d'accrochage avant (20) du bâti (11) .

4. Dispositif (10) selon l'une quelconque des revendications précédentes, **caractérisé en ce que** la paroi avant d'accrochage (20) du bâti (11) est divisée en au moins deux parties d'accrochage indépendantes (30, 40) pouvant recevoir chacune au moins un accessoire amovible (80 ;85), soit par l'intermédiaire d'une même interface (70) montée sur lesdites parties d'accrochage (30, 40), par exemple pour venir relier une boite longitudinale à brosses, soit par l'intermédiaire de plusieurs interfaces indépendantes (50 ; 60), par exemple pour relier une distribution à rampe vibrante sur une première partie d'accrochage amont (30) du bâti (11) et une brosse rotative à coucher les comprimés sur une deuxième partie d'accrochage aval (40) dudit bâti (11).

5. Dispositif (10) selon la revendication 4, **caractérisé en ce que** chaque partie d'accrochage (30 ; 40) de la paroi avant (20) du bâti (11) comporte ses propres moyens (35 ; 45) de réglage vertical selon un axe Z.

6. Dispositif (10) selon la revendication 5, **caractérisé en ce que** lesdits moyens de réglage vertical (35 ; 45) comportent :
- un bouton de manipulation (36 ; 46) agissant sur au moins un rail (39 ; 49) solidaire de ladite partie d'accrochage (30 ; 40) concernée et coulissant sur au moins une glissière de guidage vertical correspondante (38 ; 48) solidaire du bâti (11), et
- un indicateur numérique de déplacement (37 ; 47) gradué en dixièmes de millimètre.

7. Dispositif (10) selon l'une quelconque des revendications 4 à 6, **caractérisé en ce que** l'une et/ou l'autre des parties d'accrochage (30 ; 40) de la paroi avant (20) du bâti (11) comporte(nt) également des moyens (21) de réglage horizontal en profondeur selon un axe Y.

8. Dispositif (10) selon la revendication 7, **caractérisé en ce que** lesdits moyens (21) de réglage horizontal en profondeur comportent :
- un bouton de manipulation (22) agissant sur au moins une glissière (24) solidaire de ladite partie concernée (30 ; 40) et coulissant sur au moins un rail de guidage horizontal correspondant (25) solidaire du bâti (11), et
- un indicateur numérique de déplacement (23) gradué en dixièmes de millimètre.

9. Dispositif (10) selon l'une quelconque des revendications 5 à 8, **caractérisé en ce que** l'un et/ou l'autre des différents moyens de réglage (21 ; 35 ; 45) est/sont motorisé(s).

10. Dispositif (10) selon l'une quelconque des revendications 5 à 9, **caractérisé en ce que** l'une et/ou l'autre des parties d'accrochage (30 ; 40) de la paroi avant (20) du bâti (11) est/sont en outre équipée(s) de moyens automatisés de déplacement vertical alternatif en cycle carré entre deux positions prédéterminées, et ce indépendamment des moyens (35 ; 45) de réglage vertical.

11. Dispositif (10) selon l'une quelconque des revendications précédentes, **caractérisé en ce que** la paroi avant d'accrochage (20) et l'interface intermédiaire (50 ; 60 ; 70) comportent respectivement chacune au moins un module de connexion (100), lesdits modules venant se connecter l'un à l'autre en position montée de l'interface intermédiaire (50 ; 60 ; 70) sur ladite paroi d'accrochage (20) afin de piloter le/les organe(s) d'entraînement (200) disposé(s) à l'intérieur de l'interface (50 ; 60 ; 70).

12. Dispositif (10) selon la revendication 11, caractérisé en ce chaque module de connexion (100) comporte des connecteurs Harting mâle et femelle (110), des connecteurs pneumatiques (120) et au moins un doigt de guidage (115) coopérant avec un orifice (105) correspondant pour faciliter l'alignement des connecteurs lors de la mise en place de l'interface intermédiaire (50 ; 60 ; 70) sur la paroi d'accrochage (20).

13. Dispositif (10) selon la revendication 12, **caractérisé en ce que** chaque la paroi (20) du bâti (11) comporte trois connecteurs Harting (110) de type femelle entourés latéralement de deux orifices (105), tandis que l'interface intermédiaire comporte trois connecteurs Harting (110) de type mâle entourés latéralement de deux doigts de guidage (115) prévu pour s'insérer dans lesdits orifices (105) .

14. Dispositif (10) selon l'une quelconque des revendications 11 à 13, **caractérisé en ce que** la paroi avant d'accrochage (20) comporte plusieurs modules de connexion (100) alignés horizontalement.

15. Dispositif selon l'une quelconque des revendications 11 à 14, caractérisé et ce que les modules de connexion (100) comportent des silentblocs (116) leur permettant de s'aligner l'un avec l'autre lors du montage d'une interface (50 ; 60 ; 70) sur la paroi d'accrochage (20).

16. Dispositif (10) selon l'une quelconque des revendications précédentes, **caractérisé en ce qu'**il comporte des moyens de serrage de l'interface intermédiaire (50 ; 60 ; 70) en position accrochée sur le bâti (11), par exemple une manette de bridage (90) disposée latéralement sur une tranche externe du bâti.

17. Dispositif (10) selon l'une quelconque des revendications précédentes, **caractérisé en ce que** chaque accessoire (80) est relié de manière amovible à l'interface intermédiaire (50 ; 60 ; 70) par fixation de type encliquetage sur une paroi verticale avant de cette dernière, et se connecte à/aux organe(s) d'entraînement (200) associé(s) de ladite interface.

18. Dispositif (10) selon l'une quelconque des revendications précédentes, **caractérisé en ce que** l'ensemble du bâti (11) présente des moyens (13) de réglage longitudinal de sa position selon un axe X.

19. Dispositif (10) selon la revendication 18, **caractérisé en ce que** les moyens (13) de réglage longitudinal selon l'axe X comportent deux rails parallèles (14) solidaires du bâti (1) sur lesquels coulissent deux glissières (15) solidaires de la structure porteuse (2) et un réglet de mesure (16).

20. Dispositif selon la revendication 18 ou la revendication 19, **caractérisé en ce que** les moyens (13) de réglage longitudinal selon l'axe X sont motorisés.

21. Machine de conditionnement comportant notamment une blistéreuse (1) pourvue d'une structure porteuse (2) et d'un rail de distribution (3) le long duquel circule une bande de conditionnement à alvéoles soumise à un déplacement longitudinal dans un plan sensiblement horizontal, et un dispositif (10) modulable de distribution/répartition de comprimés dans lesdits alvéoles selon l'une quelconque des revendications 1 à 20, l'accessoire (10) étant placé au-dessus de la bande alvéolée.

22. Machine selon la revendication 21, **caractérisé en ce que** le dispositif comporte en outre un pupitre de commande (7) à écran tactile (8), déporté ou monté directement sur le dispositif (10) ou sur la structure porteuse (2) de la blistéreuse (1), de sorte que les accessoires sont dépourvus de moyens de pilotage.

## Patentansprüche

1. Modulierbare Vorrichtung (10) zum Ausgeben/Verteilen von Tabletten in Vertiefungen eines Verpackungsstreifens, der einer Längsverschiebung in einer im Wesentlichen horizontalen Ebene unterliegt, einer Verpackungsmaschine, die einen Blisterpacker (1) umfasst, wobei die modulierbare Vorrichtung umfasst:
- einen Rahmen (11), der dafür geeignet ist, auf dem Blisterpacker (1) montiert zu werden, wobei der Rahmen (11) eine vordere Einhängewand (20) umfasst, die vorzugsweise vertikal angeordnet ist,
- mindestens ein Zubehörteil (80; 85) zum Ausgeben/Verteilen der Tabletten in die Vertiefungen des Streifens, wie etwa einen Drehbürstenkasten, eine feste Rampe, eine Rüttelrampe, eine abwechselnde Ausgabe durch Röhren, wobei das Zubehörteil dafür vorgesehen ist, abnehmbar am Rahmen montiert zu werden,
**dadurch gekennzeichnet, dass** sie weiter eine Zwischenschnittstelle (50; 60; 70) umfasst, die dazu bestimmt ist, abnehmbar am Rahmen (11) an der vorderen Einhängewand (20) desselben eingehängt zu werden, um das mindestens eine Zubehörteil (80; 85) zu tragen, und dadurch, dass die Schnittstelle (50; 60; 70) mindestens ein Antriebsglied (200) eines beweglichen Elements des Zubehörteils/der Zubehörteile, das/die sie trägt, umschließt, wobei das mindestens eine Antriebsglied (200) aus einem Drehmotor, einem Getriebemotor (206) oder einem Stellzylinder (202) besteht.

2. Vorrichtung (10) nach Anspruch 1, **dadurch gekennzeichnet, dass** die Mittel zum Einhängen (31; 41; 51) der Schnittstelle (50; 60; 70) am Rahmen (11) vom werkzeugfreien Typ sind und, was die Schnittstelle (50; 60; 70) anbelangt, mindestens einen oberen Haken (52), der eine gerundete Innenfläche (53) umfasst, und, was die vordere Einhängewand (20) des Rahmens (11) anbelangt, mindestens einen zugehörigen oberen Vorsprung (32; 42) umfassen, der eine gerundete Außenfläche (33; 43) umfasst, wobei jeder Haken (52) so über den entsprechenden Vorsprung (32; 42) gehängt wird, dass sich seine Innenfläche (53) an die Außenfläche (33; 43) des Vorsprungs (32; 42) schmiegt.

3. Vorrichtung (10) nach Anspruch 2, **dadurch gekennzeichnet, dass** jeder Haken (52) der Schnittstelle einen Führungsstift (54) umfasst, der mit einer Nut (34; 44) zusammenwirkt, die im Vorsprung (32; 42) der vorderen Einhängewand (20) des Rahmens (11) ausgestaltet ist.

4. Vorrichtung (10) nach einem der vorstehenden Ansprüche, **dadurch gekennzeichnet, dass** die vordere Einhängewand (20) des Rahmen (11) in mindestens zwei unabhängige Einhängeteile (30, 40) geteilt ist, die jeder entweder mittels ein und derselben Schnittstelle (70), die an den Einhängeteilen (30, 40) montiert wird, zum Beispiel, um einen länglichen Bürstenkasten anzubringen, oder mittels mehrerer unabhängiger Schnittstellen (50; 60), zum Beispiel, um eine Ausgabe mit Rüttelrampen an einem ersten, vorgelagerten Einhängeteil (30) des Rahmens (11) und eine Drehbürste zum Einlegen der Tabletten an einem zweiten, nachgelagerten Einhängeteil (40) des Rahmens (11) anzubringen, mindestens ein abnehmbares Zubehörteil (80; 85) aufnehmen können.

5. Vorrichtung (10) nach Anspruch 4, **dadurch gekennzeichnet, dass** jeder Einhängeteil (30; 40) der vorderen Wand (20) des Rahmens (11) seine eigenen Mittel (35; 45) zum vertikalen Einstellen entlang einer Z-Achse umfasst.

6. Vorrichtung (10) nach Anspruch 5, **dadurch gekennzeichnet, dass** die Mittel zum vertikalen Einstellen (35; 45) umfassen:
- einen Betätigungsknopf (36; 46), der auf mindestens eine Schiene (39; 49) wirkt, die fest mit dem betreffenden Einhängeteil (30; 40) verbunden ist und auf mindestens einem entsprechenden, vertikalen Führungsschlitten (38; 48) gleitet, der fest mit dem Rahmen (11) verbunden ist, und
- eine digitale Verschiebungsanzeige (37; 47), die in zehntel Millimeter eingeteilt ist.

7. Vorrichtung (10) nach einem der Ansprüche 4 bis 6, **dadurch gekennzeichnet, dass** der eine und/oder der andere der Einhängeteile (30; 40) der vorderen Wand (20) des Rahmens (11) ebenfalls Mittel (21) zum horizontalen Einstellen der Tiefe entlang einer Y-Achse umfasst/umfassen.

8. Vorrichtung (10) nach Anspruch 7, **dadurch gekennzeichnet, dass** die Mittel (21) zum horizontalen Einstellen der Tiefe umfassen:
- einen Betätigungsknopf (22), der auf mindestens einen Schlitten (24) wirkt, der fest mit dem betreffenden Teil (30; 40) verbunden ist und auf mindestens einer entsprechenden horizontalen Führungsschiene (25) gleitet, die fest mit dem Rahmen (11) verbunden ist, und
- eine digitale Verschiebungsanzeige (23), die in zehntel Millimeter eingeteilt ist.

9. Vorrichtung (10) nach einem der Ansprüche 5 bis 8, **dadurch gekennzeichnet, dass** das eine und/oder das andere der unterschiedlichen Einstellmittel (21; 35; 45) motorisiert ist/sind.

10. Vorrichtung (10) nach einem der Ansprüche 5 bis 9, **dadurch gekennzeichnet, dass** der eine und/oder der andere der Einhängeteile (30; 40) der vorderen Wand (20) des Rahmens (11) weiter mit automatisierten Mitteln zum abwechselnden vertikalen Verschieben in einem quadratischen Zyklus zwischen zwei vorbestimmten Stellungen, und dies unabhängig von den Mitteln zum vertikalen Einstellen (35; 45), ausgestattet ist/sind.

11. Vorrichtung (10) nach einem der vorstehenden Ansprüche, **dadurch gekennzeichnet, dass** die vordere Einhängewand (20) und die Zwischenschnittstelle (50; 60; 70) jede jeweils mindestens ein Verbindungsmodul (100) umfassen, wobei die Module in montierter Stellung der Zwischenschnittstelle (50; 60; 70) an der Einhängewand (20) miteinander verbunden werden, um das Antriebsglied/die Antriebsglieder (200), das/die im Inneren der Schnittstelle (50; 60; 70) angeordnet ist/sind, zu steuern.

12. Vorrichtung (10) nach Anspruch 11, **dadurch gekennzeichnet, dass** jedes Verbindungsmodul (100) männliche und weibliche Harting-Verbinder (110), pneumatische Verbinder (120) und mindestens einen Führungszapfen (115) umfasst, der mit einer entsprechenden Öffnung (105) zusammenwirkt, um das Ausrichten der Verbinder beim Einbau der Zwischenschnittstelle (50; 60; 70) an der Einhängewand (20) zu vereinfachen.

13. Vorrichtung (10) nach Anspruch 12, **dadurch gekennzeichnet, dass** jede Wand (20) des Rahmens (11) drei Harting-Verbinder (110) vom weiblichen Typ umfasst, die seitlich von zwei Öffnungen (105) umgeben sind, während die Zwischenschnittstelle drei Harting-Verbinder (110) vom männlichen Typ umfasst, die seitlich von zwei Führungszapfen (115) umgeben sind, welche dafür vorgesehen sind, sich in die Öffnungen (105) einzufügen.

14. Vorrichtung (10) nach einem der Ansprüche 11 bis 13, **dadurch gekennzeichnet, dass** die vordere Einhängewand (20) mehrere horizontal ausgerichtete Verbindungsmodule (100) umfasst.

15. Vorrichtung nach einem der Ansprüche 11 bis 14, **dadurch gekennzeichnet, dass** die Verbindungsmodule (100) Silentblöcke (116) umfassen, die es ihnen ermöglichen, sich bei der Montage einer Schnittstelle (50; 60; 70) an der Einhängewand (20) zueinander auszurichten.

16. Vorrichtung (10) nach einem der vorstehenden Ansprüche, **dadurch gekennzeichnet, dass** sie Mittel zum Festklemmen der Zwischenschnittstelle (50; 60; 70) in eingehängter Stellung am Rahmen (11) umfasst, zum Beispiel einen Spanngriff (90), der seitlich an einem äußeren Abschnitt des Rahmens angeordnet ist.

17. Vorrichtung (10) nach einem der vorstehenden Ansprüche, **dadurch gekennzeichnet, dass** jedes Zubehörteil (80) abnehmbar an der Zwischenschnittstelle (50; 60; 70) angebracht wird durch Befestigung vom Typ einer Verrastung an einer vorderen vertikalen Wand dieser letzteren, und mit dem/den zugehörigen Antriebsglied(ern) (200) der Schnittstelle verbunden wird.

18. Vorrichtung (10) nach einem der vorstehenden Ansprüche, **dadurch gekennzeichnet, dass** der gesamte Rahmen (11) Mittel (13) zum Längseinstellen seiner Stellung entlang einer X-Achse aufweist.

19. Vorrichtung (10) nach Anspruch 18, **dadurch gekennzeichnet, dass** die Mittel (13) zum Längseinstellen entlang der X-Achse zwei fest mit dem Rahmen (1) verbundene, parallele Schienen (14), auf denen zwei fest mit der Tragstruktur (2) verbundene Schlitten (15) gleiten, und eine Messleiste (16) umfassen.

20. Vorrichtung nach Anspruch 18 oder Anspruch 19, **dadurch gekennzeichnet, dass** die Mittel (13) zum Längseinstellen entlang der X-Achse motorisiert sind.

21. Verpackungsmaschine, die insbesondere einen Blisterpacker (1), der mit einer Tragstruktur (2) und einer Ausgabeschiene (3) versehen ist, entlang der ein Verpackungsstreifen mit Vertiefungen läuft, der einer Längsverschiebung in einer im Wesentlichen horizontalen Ebene unterliegt, und eine modulierbare Vorrichtung (10) zum Ausgeben/Verteilen von Tabletten in die Vertiefungen nach einem der Ansprüche 1 bis 20 umfasst, wobei das Zubehörteil (10) über dem Streifen mit Vertiefungen platziert ist.

22. Maschine nach Anspruch 21, **dadurch gekennzeichnet, dass** die Vorrichtung weiter ein Bedienpult (7) mit berührungsempfindlichem Bildschirm (8) umfasst, das versetzt oder direkt an der Vorrichtung (10) oder an der Tragstruktur (2) des Blisterpackers (1) montiert ist, sodass die Zubehörteile frei von Steuermitteln sind.

## Claims

1. Modular device (10) for dispensing/distributing tablets into cells of a packaging belt subjected to a longitudinal movement in a substantially horizontal plane of a packaging machine including a blister-packer (1), said modular device including:
- a frame (11) adapted to be mounted on the blister-packer (1), said frame (11) including a front fastening wall (20) arranged preferably vertically,
- at least one accessory (80; 85) for dispensing/distributing said tablets into the cells of the belt, such as a case with rotating brushes, a fixed ramp, a vibrating ramp, an alternative dispensing by tubes, said accessory being provided to be removably mounted on said frame,
**characterised in that** it further comprises an intermediate interface (50; 60; 70) intended to be removably fastened to the frame (11), against the front fastening wall (20) thereof, to support said at least one accessory (80; 85) and **in that** said interface (50; 60; 70) contains at least one member for driving (200) a mobile element of the accessory(ies) that it supports, said at least one drive member (200) consisting of a rotating motor, a geared motor (206) or an actuating cylinder (202).

2. Device (10) according to claim 1, **characterised in that** the fastening means (31; 41; 51) of the interface (50; 60; 70) on the frame (11) are of the type without use of tools and include, for the interface (50; 60; 70), at least one upper hook (52) comprising a rounded inner surface (53) and, for the front fastening wall (20) of the frame (11), at least one associated upper projection (32; 42) including a rounded outer surface (33; 43), each hook (52) being suspended above the corresponding projection (32; 42) such that the inner surface (53) thereof moulds the outer surface (33; 43) of the projection (32; 42).

3. Device (10) according to claim 2, **characterised in that** each hook (52) of the interface includes a guiding pin (54) engaging with a groove (34; 44) arranged in the projection (32; 42) of the front fastening wall (20) of the frame (11).

4. Device (10) according to any one of the preceding claims, **characterised in that** the front fastening wall (20) of the frame (11) is divided into at least two independent fastening portions (30, 40) which could each receive at least one removable accessory (80; 85), either by way of one same interface (70) mounted on said fastening portions (30, 40), for example to connect a longitudinal case with brushes, or by way of several independent interfaces (50; 60), for example to connect a vibrating ramp dispensing on a first upstream fastening portion (30) of the frame (11) and a rotating brush to lay the tablets on a second downstream fastening portion (40) of said frame (11).

5. Device (10) according to claim 4, **characterised in that** each fastening portion (30; 40) of the front wall (20) of the frame (11) includes its own vertical adjustment means (35; 45) along an axis Z.

6. Device (10) according to claim 5, **characterised in that** said vertical adjustment means (35; 45) include:
- an operating button (36; 46) acting on at least one rail (39; 49) secured to said concerned fastening portion (30; 40) and sliding over at least one corresponding vertical guiding slider (38; 48) secured to the frame (11), and
- a digital movement indicator (37; 47) graduated in tenths of millimetres.

7. Device (10) according to any one of claims 4 to 6, **characterised in that** one and/or the other of the fastening portions (30; 40) of the front wall (20) of the frame (11) also include(s) means (21) for horizontally adjusting depth along an axis Y.

8. Device (10) according to claim 7, **characterised in that** said means (21) for horizontally adjusting depth include:
- an operating button (22) acting on at least one slider (24) secured to said concerned portion (30; 40) and sliding over at least one corresponding horizontal guiding rail (25) secured to the frame (11), and
- a digital movement indicator (23) graduated in tenths of millimetres.

9. Device (10) according to any one of claims 5 to 8, **characterised in that** one and/or the other of the different adjustment means (21; 35; 45) is/are motorised.

10. Device (10) according to any one of claims 5 to 9, **characterised in that** one and/or the other of the fastening portions (30; 40) of the front wall (20) of the frame (11) is/are further equipped with automated square cycle alternative vertical movement means between two predetermined positions, and this, independently of the vertical adjustment means (35; 45).

11. Device (10) according to any one of the preceding claims, **characterised in that** the front fastening wall (20) and the intermediate interface (50; 60; 70) each include respectively at least one connection module (100), said modules being connected to one another in the mounted position of the intermediate interface (50; 60; 70) on said fastening wall (20) in order to control the drive member(s) (200) arranged inside the interface (50; 60; 70) .

12. Device (10) according to claim 11, **characterised in that** each connection module (100) includes male and female Harting connectors (110), pneumatic connectors (120) and at least one guiding finger (115) engaging with a corresponding orifice (105) to facilitate the alignment of the connectors during the implementation of the intermediate interface (50; 60; 70) on the fastening wall (20) .

13. Device (10) according to claim 12, **characterised in that** each wall (20) of the frame (11) includes three female-type Harting connectors (110) surrounded laterally by two orifices (105), while the intermediate interface includes three male-type Harting connectors (110) surrounded laterally by two guiding fingers (115) provided to be inserted in said orifices (105).

14. Device (10) according to any one of claims 11 to 13, **characterised in that** the front fastening wall (20) includes several connection modules (100) aligned horizontally.

15. Device according to any one of claims 11 to 14, **characterised in that** the connection modules (100) include mounting cushions (116) making it possible for them to be aligned with one another during the mounting of an interface (50; 60; 70) on the fastening wall (20).

16. Device (10) according to any one of the preceding claims, **characterised in that** it includes means for clamping the intermediate interface (50; 60; 70) in the fastened position on the frame (11), for example a flanging handle (90) arranged laterally on an outer section of the frame.

17. Device (10) according to any one of the preceding claims, **characterised in that** each accessory (80) is removably connected to the intermediate interface (50; 60; 70) by fixing of the snap-fitting type on a front vertical wall of the latter, and is connected to the drive member(s) (200) associated with said interface.

18. Device (10) according to any one of the preceding claims, **characterised in that** the assembly of the frame (11) has means (13) for longitudinally adjusting the position thereof along an axis X.

19. Device (10) according to claim 18, **characterised in that** the longitudinal adjustment means (13) along the axis X include two parallel rails (14) secured to the frame (1) on which two sliders (15) slide, secured to the carrying structure (2) and a measuring rule (16).

20. Device according to claim 18 or claim 19, **characterised in that** the longitudinal adjustment means (13) along the axis X are motorised.

21. Packaging machine including, in particular, a blister-packer (1) provided with a carrying structure (2) and a dispensing rail (3) along which a packaging belt with cells circulates, subjected to a longitudinal movement in a substantially horizontal plane, and a modular device (10) for dispensing/distributing tablets into said cells according to any one of claims 1 to 20, the accessory (10) being placed above the honeycomb belt.

22. Machine according to claim 21, **characterised in that** the device further includes an operating panel (7) with touchscreen (8), deported or mounted directly on the device (10) or on the carrying structure (2) of the blister-packer (1), such that the accessories have no control means.
